# EUROPEAN PATENT SPECIFICATION

(11) **EP 0 774 296 B1**
(45) Date of publication and mention of the grant of the patent: **06.02.2002**
(21) Application number: 96117659.1
(22) Date of filing: 04.11.1996
(51) Int. Cl.: B01J 20/20, B01J 20/28

(54) **Method of making activated carbon bodies having improved adsorption properties**
Methode zum Herstellen von Aktivkohlenstoffkörpern mit Adsorptionseigenschaften
Méthode pour fabriquer des corps en charbon actif ayant des propriétés d'adsorption

(30) Priority: 17.11.1995 US 6912
(43) Date of publication of application: 21.05.1997
(73) Proprietor: CORNING INCORPORATED, Corning, N.Y. 14831 (US)
(72) Inventor: Gadkaree, Kishor Purushottam, Corning, NY 14831 (US)
(74) Representative: Marchant, James Ian

(56) References cited:
- EP-A- 0 264 523
- EP-A- 0 608 539
- DE-A- 3 339 756
- US-A- 4 024 076
- US-A- 4 286 972
- DATABASE WPI Week 9312 Derwent Publications Ltd., London, GB; AN 93-096462 XP002032328 & JP 05 038 414 A (MITSUI PETROCHEM)
- CHEMICAL ABSTRACTS, vol. 100, no. 20, 14 May 1984 Columbus, Ohio, US; abstract no. 158933z, KANEBO: "NETWORK-STRUCTURE ACTIVATED CARBON" page 136; column 1; XP002032327

## Description

This invention relates to activated carbon with improved adsorption properties. The activated carbon is derived from synthetic carbon precursors and the improved adsorption is due to the inclusion of an additive or modifier for the precursor to enhance the adsorption properties of the carbon precursor.

### Background of the Invention

Activated carbon is utilized in many industrial applications for process stream purifications as well as pollution control.

Activated carbon can take the form of a shaped body, or a coating on a substrate, or as granules.

One method of making activated carbon is to carbonize a carbon precursor such as a synthetic resin, followed by activation.

Activated carbon coated inorganic honeycombs have been discussed in U.S. patent 5,451,444. The cordierite honeycombs are coated with a synthetic polymeric precursor to carbon. The polymer infiltrates the porous honeycomb and forms an interpenetrating network structure. Thermosetting synthetic resins are preferred because of low cost and water solubility. The activated carbon coated honeycombs obtained by carbonizing and activating the carbon coat on the cordierite honeycombs have high adsorption capacity, high strengths, and ability to perform at high temperatures.

The present invention provides an activated carbon product with improved adsorption properties.

### Summary of the Invention

In accordance with one aspect, the present invention provides a method of making an activated carbon body, the method comprising:
a) providing an inorganic substrate;
b) providing a thermosetting resin and an adsorption enhancing additive which is elemental sulfur with optional addition of oil which is non-miscible with and non-reactive with the thermosetting resin;
c) contacting the inorganic substrate with the thermosetting resin and the adsorption enhancing additive to coat the substrate with the thermosetting resin and the adsorption enhancing additive;
d) curing the thermosetting resin;
e) carbonizing the cured thermosetting resin; and
f) activating the carbonized cured thermosetting resin to produce a coating of activated carbon on the substrate and form the activated carbon body.

In accordance with another aspect, the present invention provides a method of making an activated carbon body, the method comprising:
a) forming a mixture comprising a thermosetting resin, an adsorption enhancing additive, selected from the group consisting of elemental sulfur, phosphoric acid, and combinations thereof, with optional additions of oil which is non-miscible with and non-reactive with the thermosetting resin as additional adsorption enhancing additive, and combinations thereof, temporary organic binder, and fillers;
b) shaping the mixture into a body;
c) curing the thermosetting resin;
d) carbonizing the cured thermosetting resin; and
e) activating the carbonized cured thermosetting resin to produce a shaped body of activated carbon.

In accordance with a further aspect the invention provides the use of an activated carbon body produced by a method as defined above for the removal of one or more components from a workstream by passing the workstream therethrough.

### Detailed Description of the Invention

This invention relates to making activated carbon having improved adsorption ability. These advantages are afforded by making activated carbon from a thermosetting resin as synthetic carbon precursor which is first treated with an additive, modifier or agent that ultimately enhances adsorption properties of the activated carbon product, and thereafter cured, carbonized, and activated.

The activated carbon can take the form of a coating on a substrate, or a shaped monolithic structure of activated carbon formed from a mixture which includes the carbon precursor and the adsorption enhancing agent, or it can take the form of granules. The forming mixture can be granulated, preferably by extruding noodles which are then broken up. More preferably granules are formed by breaking up a cured body preferably before carbonization.

### The carbon precursor

By carbon precursor is meant a synthetic polymeric carbon-containing substance that converts to continuous structure carbon on heating. For purposes of this invention, the synthetic carbon precursor is a thermosetting resin, and a thermosetting resin in the form of a solution or low viscosity liquid at ambient temperatures or capable of being liquified by heating or other means is especially useful. Solid thermosetting resins can be used in shaping activated carbon mixtures.

A carbon precursor is preferred over activated carbon particle coating because as a result of curing, carbonizing and activating, the carbon atoms are arranged in a continuous uninterrupted structure of random three dimensional graphitic platelets. The platelets have angstrom sized pores typically 5 to 50 angstroms for adsorption as distinguished from micron-size pores. Pores in several hundred micron size range can be present in the activated carbon, but they do not contribute to adsorption capacity.

Low viscosity thermosetting resins are preferred for coating applications because their low viscosity allows greater penetration of the carbon precursor into porous inorganic substrates. Typical resin viscosity ranges from 50 to 100 mPas (cps). Phenolic resins are most preferred due to their low viscosity, high carbon yield, high degree of cross-linking upon curing relative to other precursors, and low cost. The thermosetting resin carbon precursor liquid used in the present method can include a single such precursor material or a mixture of two or more such precursor materials. Optionally, activated carbon can be added to the carbon precursor liquid to increase the adsorptive capability of the activated carbon structure.

Any high carbon yield thermosetting resin can be used. By high carbon yield is meant that greater than 10% of the starting weight of the resin is converted to carbon on carbonization. Phenolic and furan resins are the most suitable. One especially suitable furan liquid resin is Furcarb-LP from QO Chemicals Inc. Suitable phenolic resins are resole resin such as 43250 plyophen resin, and 43290 from Occidental Chemical Corporation, and Durite resole resin from Borden Chemical Company. Solid resins can be used in shaping the activated carbon. One especially suited solid resin is solid phenolic resin or novolak.

In the practice of this invention, a phenolic resin can also be made by reacting phenol with formaldehyde and any of the numerous curing agents as is known by those skilled in the art. Some typical curing agents are NH₄OH, NaOH, sodium carbonate, primary or secondary amines, formic, oxalic, sulfuric acids, etc.

### The adsorption-enhancing additives

Several substances have been found to increase the adsorption capacity of activated carbon when they are added to the carbon precursors from which the activated carbon is derived.

In general, the substances found suitable as adsorption enhancing additives are sulfur, precipitated or sublimed, in particular fine sulfur, that is, sulfur having a particle size of less than 300 micrometers (-50 mesh), and preferably less than 150 micrometers (-100 mesh); phosphoric acid; and as optional additional adsorption enhancing additive, mineral, vegetable and synthetic oils which are non-miscible with and non-chemically reactive with the carbon precursor.

It is preferred that the oil have a viscosity no greater than 100 Pas (1000 poise), preferably no greater than 50 Pas (500 poise) and most preferably no greater than 20 Pas (200 poise). One of the many suited oils is supplied by 3M under the name of 3 in 1 household oil.

Sulfur added as a particulate additive directly to the resin may not react with the resin during cure. Sulfur melts and reacts with the resin during carbonization. On activation, these compounds contribute to forming a highly adsorbent carbon. The activated carbon has sulfur-carbon compounds in the structure.

Phosphoric acid reacts with the precursor when the precursor is phenolic resin and accelerates the curing reaction. It is believed that the phosphorus compounds are integrated into the resin structure. Upon activation, a highly adsorbent carbon is formed with phosphorus-carbon compounds present in the carbon structure.

With the oils, the immiscible oil, does not take part in curing reactions. It is phase separated from the precursor. Since it is not integrated into the structure, the oil additive remains in a well-mixed but separate phase. During carbonization, the oil is removed by evaporation. The oil thus makes a much higher surface area of the cured resin available for reaction. During carbonization, the oil evaporates and the remaining high surface area carbon structure is activated to obtain highly adsorbent carbon.

Some useful oils are petroleum oils with molecular weights from 250 to 1000, containing paraffinic and/or aromatic and/or alicyclic compounds. So called paraffinic oils composed primarily of paraffinic and alicyclic structures are preferred. These can contain additives such as rust inhibitors or oxidation inhibitors such as are commonly present in commercially available oils. One especially useful oil is 3 in 1 oil. Other useful oils are synthetic oils based on poly alpha olefins, esters, polyalkylene glycols, polybutenes, silicones, polyphenyl ether, CTFE oils, and other commercially available oils. Vegetable oils such as sunflower oil, sesame oil, peanut oil, etc. are also useful.

Depending on the form of activated carbon, certain of the substances are suitable as adsorption enhancing agents. For example, if a coating of activated carbon is to be formed on a substrate, sulfur and oil are suited. If the precursor is to be shaped into a body which is thereafter cured, carbonized, and activated, phosphoric acid, sulfur, and the oils are all suitable. The carbon precursor is combined with the adsorption enhancing agent. There is no restriction on how this is done as long as they are well mixed with other components in the coating or forming mixture.

For coating and most of the applications involving shaping, e.g. extrusion compositions, the modifier is mechanically mixed with the resin. For coating, the liquid containing the modifier is coated on the surfaces of the substrate.

The precursor-agent mixture especially is suitable for coating on a substrate and penetrating through to the porosity of the substrate. When coated onto a substrate, upon curing and carbonizing, a coating is produced that is physically interlocked within the interconnecting porosity of the substrate.

The coating is preferably a continuous uninterrupted activated carbon impregnated into the pores of the substrate. The coating can also be distributed over the outer surface of the substrate.

In one preferred embodiment, the adsorption enhancing agent is sulfur and the carbon precursor is a thermosetting resin such as phenolic resin, e.g. phenolic resole. In this embodiment, the preferred composition of coating mixture is 0.1% to 25%, and preferably 2% to 10% by weight sulfur with the balance being the thermosetting resin which is preferably phenolic resin e.g. phenolic resole.

Some especially suited substrate materials are ceramic, glass ceramic, glass, metal, and combinations thereof. By combinations is meant physical or chemical combinations, eg., mixtures, compounds, or composites. Molecular sieves, e.g. zeolites are also suitable substrate materials.

Some materials that are especially suited to the practice of the present invention, although it is to be understood that the invention is not limited to such, are those made of cordierite, mullite, clay, talc, zircon, zirconia, zirconates, zirconia-spinel, zeolites, magnesium alumino-silicates, spinel, alumina, silica, silicates, borides, alumino-silicates, eg., porcelains, lithium aluminosilicates, alumina silica, feldspar, titania, fused silica, nitrides, borides, carbides, eg., silicon carbide, silicon nitride, or mixtures of these. Especially useful materials are cordierite and/or mullite. Cordierite is preferred because its coefficient of thermal expansion is comparable to that of carbon, increasing the stability of the activated carbon body.

The invention is suitable for use with metal substrates. These substrates can be made of any sinterable metal or metal composition. Especially suited are iron group metal, chromium, and aluminum compositions, with the preferred iron group metal being iron. Especially preferred is Fe, Al, and Cr. For example, Fe5-20Al5-40Cr, and Fe7-10Al10-20Cr powders with other possible additions are especially suited. Some typical compositions of metal powders are disclosed in U.S. Patent 4,992,233, 4,758,272,
and EP-A-488716. US patent 4,992,233 relates to methods of producing porous sintered bodies made from metal powder compositions of Fe and Al with optional additions of Sn, Cu, and Cr. EP-A-488716 relates to porous sintered bodies having a composition consisting essentially of in percent by weight 5 to 40 chromium, 2 to 30 aluminium, 0 to 5 of special metal, 0 to 4 of rare earth oxide additive
and the balance being iron group metal, and unavoidable impurities such as eg., Mn or Mo, with the preferred iron group metal being iron. When rare earth oxide is present, the special metal is at least one of Y, lanthanides, Zr, Hf, Ti, Si, alkaline earth metal, B, Cu, and Sn. When no rare earth oxide is present, the special metal is at least one of Y, lanthanides, Zr, Hf, Ti, Si, and B, with optional additions of alkaline earths, Cu, and Sn.

The substrate is preferably in the shape of a honeycomb having a matrix of thin porous walls which form a multiplicity of cells or channels extending between the ends of the honeycomb.

Some examples of honeycombs produced by the process of the present invention, although it is to be understood that the invention is not limited to such, are those having 172 cells/cm² (1100 cells/in²), 94 cells cm² (600 cells/in²), 62 cells/cm² (400 cells/in²), or 47 cells/cm² (300 cells/in²), those having 31 cells/cm² (200 cells/in²), or 15 cells/cm² (100 cells/in²), or 2.5 cells/cm² (16 cells/in²), or 1.5 cells/cm² (9 cells/in²).

Wall (web) thicknesses range typically from 0.1 to 1.3 mm (4 to 50 mils) for most applications and it is to be understood that the invention is not limited to these dimensions. The external size and shape of the body is controlled by the application and is not limited to those described above. For example, other combinations of cell densities and wall thicknesses can be made.

The substrate can be fabricated in a number of ways. For example, a ceramic honeycomb with straight channels or cells is manufactured according to methods well known in the art.

The activated carbon body can be made by shaping a mixture of raw materials such as by extrusion followed by heat-treating. The preferred shape is a honeycomb. The wall porosity of the honeycomb is controlled by the raw materials used during the manufacture and the process conditions during fabrication. A burnout agent such as graphite, carbon powder, wood fibers, cellulose, etc. are typically used during extrusion which burns off during subsequent high temperature processing, leaving pores of the size determined by the size of the burnout agent particulates. Porosity can also be controlled by choosing appropriate raw materials which form porosity during sintering. Such a honeycomb is then impregnated with a carbon precursor material which is subsequently cured, carbonized, and the carbon activated. Upon curing and carbonizing, a coating is produced that is physically interlocked within the interconnecting porosity of the substrate. Impregnating substrates with carbon precursors followed by curing, carbonizing, and activating is described in U.S. patent 5,451,444.

The carbon precursor and adsorption enhancing agent or modifier can be made into a mixture with a temporary organic binder and forming, (e.g. extrusion) aids, such as lubricants, surfactants, etc. and shaped into a form which can be cured, carbonized, and activated. The precursor and agent can be combined with fillers.

In a preferred embodiment, the activated carbon shaped adsorber can be made by shaping, e.g. extruding, a mixture of liquid or solid thermosetting resin as the carbon precursor, the agent, fillers, especially hydrophilic fillers, temporary organic binder, e.g. cellulose ethers, such as methylcellulose and/or its derivatives, and optionally forming aids such as lubricants, e.g. sodium stearate (soap). Liquid thermosetting resin is preferred with liquid phenolic resin, e.g. phenolic resole being especially preferred. Liquid such as phenolic resin, (e.g. phenolic resole) has a high viscosity e.g. 100-1000 mPas (cps). The shaped body is dried, and the resin is cured, carbonized, and activated to form the adsorber.

### The temporary organic binder

A temporary or fugitive binder is used to bind the precursor, agent, and fillers, and will be removed in the heat-treatments. A plasticizing organic binder contributes to the plasticity of the mixture for shaping into a body. The plasticizing organic binder according to the present invention refers to cellulose ether binders. Some typical cellulose ethers are methylcellulose and its derivatives such as ethylhydroxy ethylcellulose, hydroxybutylcellulose, hydroxybutyl methylcellulose, hydroxyethylcellulose, hydroxymethylcellulose, hydroxypropylcellulose, hydroxypropyl methylcellulose, hydroxyethyl methylcellulose, sodium carboxy methylcellulose, and mixtures thereof. Methylcellulose and/or methylcellulose derivatives are especially suited as organic binders in the practice of the present invention with methylcellulose, hydroxypropyl methylcellulose, or combinations of these being preferred. This can include a mixture of different types of methylcellulose and/or different types of hydroxypropyl methylcellulose. Some sources of methylcellulose and/or its derivatives are Methocel A4M, F4M, and F40M from Dow Chemical Co.

### The forming aids

Forming aids are included as optional additions to the raw material mixture in amounts sufficient to enhance the lubricity of the mixture for ease in passing through the extruder and die, especially in solid resin mixtures. Some preferred extrusion aids are soaps, fatty acids such as oleic, linoleic acid, etc., polyoxyethylene stearate, etc. or combinations of these. Especially preferred is sodium stearate. Optimized amounts of extrusion aid(s) depend on the composition and binder, although generally extrusion aids make up no more than 3% by weight of the mixture.

### The fillers

In these embodiments, for both liquid and solid resin systems, the filler must be hydrophilic in order to be easily wet by the liquids in the system. The fillers can be inorganic The fillers are most typically an oxygen-containing, e.g. oxide substance, and are therefore relatively inexpensive. Some especially suited fillers for the shaping mixture are described in U.S. Patent No 5,820,967.

The fillers can be fibrous. Fibrous fillers typically give higher strength and stiffness to a structure compared a particulate structure. According to this invention, by fibrous is meant a length of up to 1 centimeter, and preferably up to 500 micrometers. The diameter is up to 500 micrometers, preferably up to 100 micrometers, and most preferably up to 10 micrometers.

Depending on whether the resin is liquid or solid, the types of fillers that must be used will vary.

Using either liquid or solid resin alone presents certain problems.

For example, liquid resin has a very low viscosity and requires some type of filler to be extrudable. Elemental carbon fillers may be used to form an extrudable batch but on carbonization such structures have poor strength since the carbon filler does not bond to the resin.

For liquid resin systems, it was found that addition of a hydrophilic carbonizable (essentially organic) filler, with or without a hydrophobic organic filler, (preferably fibrous), is necessary to form a good honeycomb extrusion. Hydrophilic organic fibrous filler allows the liquid resin to infiltrate the fibrous structure at high loading levels. The mixture has good rigidity and is extruded into a honeycomb shape easily and maintains the shape on carbonization. Inorganic hydrophilic fillers preferably with a fibrous morphology can also be used with liquid resins in addition to the carbonizable filler. Mixtures of organic and inorganic fillers result in optimized strength and rigidity of the final carbon product, as well as minimization of cost. Inorganic fillers also minimize shrinkage and warpage.

Both natural and synthetic carbonizable fillers can be used. Some natural materials are soft woods, e.g. pine, spruce, redwood, etc., hardwoods e.g. ash, beech, birch, maple, oak, etc., sawdust, shell fibers e.g. ground almond shell, coconut shell, apricot pit shell, peanut shell, pecan shell, walnut shell, etc., cotton fibers e.g. cotton flock, cotton fabric, cellulose fibers, cotton seed fiber, chopped vegetable fibers for example, hemp, coconut fiber, jute, sisal, and other materials such as corn cobs, citrus pulp (dried), soybean meal, peat moss, wheat straw, wool fibers, corn, potato, rice, and tapioca etc. Some synthetic materials are regenerated cellulose, rayon fabric, cellophane, etc.

Some examples of carbonizable fillers that are especially suited for liquid resins are cellulose, cotton, wood, and sisal, or combinations of these, all of which are preferably in the form of fibers.

One especially suited carbonizable fiber filler is cellulose fiber as supplied by International Filler Corporation, North Tonowanda, N.Y. This material has the following sieve analysis: 1-2% on 40 mesh (420 micrometers), 90-95% thru 100 mesh (149 micrometers), and 55-60% thru 200 mesh (74 micrometer).

Activated carbon can also be used as a filler.

Some inorganic fillers that can be used are oxygen containing minerals such as clays, zeolites, talc, etc., carbonates, such as calcium carbonate, aluminosilicates such as kaolin (an aluminosilicate clay), flyash (an aluminosilicate ash obtained after coal firing in power plants), silicates, e.g. wollastonite (calcium metasilicate), titanates, zirconates, zirconia, zirconia spinel, magnesium aluminum silicates, mullite, alumina, alumina trihydrate, spinel, feldspar, attapulgites, and aluminosilicate fibers, cordierite powder, etc.

Some examples of especially suited inorganic fillers are cordierite powder, talcs, clays, and aluminosilicate fibers such as provided by Carborundum Co. Niagara Falls, N.Y. under the name of Fiberfax, and combinations of these. Fiberfax aluminosilicate fibers measure about 2-6 micrometers in diameter and about 20-50 micrometers in length.

Hydrophobic organic fillers provide additional support to the shaped structure and introduce wall porosity on carbonization because in general they leave very little carbon residue. Some hydrophobic organic fillers are polyacrylonitrile fibers, polyester fibers (flock), nylon fibers, polypropylene fibers (flock) or powder, acrylic fibers or powder, aramid fibers, polyvinyl alcohol, etc.

In general the particle or fiber size of the fillers must be such that they will be able to pass through the respective die in forming thin walled structures such as honeycombs. For example, for extrusion of a 0.15 mm (6 mil) wall honeycomb through a die that has 152 micrometer openings, up to 420 micrometer long cellulose fibers have been found to work well. This example is merely illustrative and it is to be understood that the invention is not limited to specific size fillers for specific size structures.

For both solid and liquid resins, the filler normally makes up 2% to 95 wt.% of the mixture (excluding any water that is added). The weight ratio of filler to resin is generally 0.2 to 1 to 4.0 to 1, although this can vary.

It is preferred, especially with liquid thermosetting resin, that the level of adsorption enhancing agent in the mixture be in wt.% 0.1% to 20% sulfur, 0 to 10% oil, and 0 to 5% phosphoric acid with 5% to 15% sulfur and 0.5% to 3% oil being especially preferred.

Some advantageous mixture compositions with liquid thermosetting resins are given below in weight percents.

One advantageous mixture is made up of 0.1% to 20% sulfur, 0 to 5% phosphoric acid, 0 to 7% oil, 2% to 95% fillers, 0.5% to 10% cellulose ether temporary organic binder, 0 to 2% lubricant, with the balance being phenolic resin.

Another advantageous mixture is made up of 0.1% to 20% sulfur, 0 to 5% phosphoric acid, 0 to 7% oil, 5% to 50% cellulose fibers, 0 to 15% hydrophobic organic filler, 2% to 10% organic binder which can be methylcellulose, and/or its derivatives, 0% to 2% lubricant, and the balance being phenolic resole.

Still another advantageous mixture is made up of 5% to 15% sulfur, 0.5% to 3% oil, 15% to 30% filler which can be cellulose fibers, and/or wood fibers, 5% to 20% cordierite, 2% to 8% organic binder which can be methylcellulose, and/or its derivatives, 0.5% to 3% sodium stearate lubricant, and the balance being phenolic resole.

Additionally, the above-described preferred adsorption enhancing agents for liquid thermosetting resins can be used in any of the mixtures given below in weight percent:
1) 2% to 50% cellulose fibers or wood fibers, 2% to 10% organic binder which is typically methylcellulose, and/or methylcellulose derivatives, 0% to 15% hydrophobic organic filler such as polyester flock, polypropylene flock or powder, acrylic fibers or powders, etc, 0% to 2% lubricant, e.g. soap, and the balance being phenolic resole, or
2) 20% to 35% cellulose fibers, or wood fibers, 2% to 10% and more typically 3% to 7% organic binder which can be methylcellulose, and/or its derivatives, 0% to 2.0% lubricant, e.g. soap, and the balance being phenolic resole; or
3) Compositions 1 and 2 can include additionally 5% to 60% and more advantageously 10% to 30% cordierite powder filler; or
4) 2% to 50% cellulose fibers or wood fibers, 30% to 45% inorganic filler which can be any one or combination of cordierite powder, clay, and talc, 2% to 10% organic binder which can be methylcellulose, and/or its derivatives, 0% to 2% lubricant, e.g. soap, and the balance being phenolic resole.
5) 9% to 25%, and most typically 10% to 15% cellulose fibers, 30% to 45% inorganic filler which can be clay, e.g. hydrite clay, talc, or cordierite powder, or combinations of these, 2% to 10% organic binder which can be methylcellulose, and/or its derivatives, 0% to 2.0%, e.g. soap, and the balance being phenolic resole.

Such compositions are advantageous for liquid resin systems because the carbonizable hydrophilic materials such as cellulose fibers soak in the liquid resin and form a stiff batch which can be extruded. Additionally on carbonization, they yield carbon which results in additional adsorption capacity. The inorganic filler reduces shrinkage on carbonization and imparts strength and stiffness and reduces batch cost.

Solid phenolic resin (novolak) is solid at room temperature, but melts at 60-75°C. The cure temperature is, however about 150°C. As the extruded product is heated to cure the resin at about 150°C, the structure collapses at about 75°C.

For solid systems, the filler stiffens the structure during the softening of the resin before cure. The filler can be either a carbonizable or an inorganic material. A combination of inorganic and carbonizable material is preferred. Hydrophobic organic fillers are also desirable in solid resin mixtures. The advantages of carbonizable and hydrophobic organic fillers have been previously discussed.

The preferred solid resin is novolak.

The carbonizable and inorganic fillers are the same as described above for liquid resins. For solid resins, fibrous inorganic fillers are especially useful.

For solid thermosetting resins, it is preferred that the level of adsorption enhancing agent in the mixture be in wt.% 0.1% to 20% sulfur, and 0 to 10% oil, with 5% to 15% sulfur and 0.5% to 3% oil being especially preferred.

Some advantageous mixture compositions with solid thermosetting resins and the above adsorption enhancing agents are given below in weight percents.
1) 2% to 50% cellulose fiber, 5% to 50% filler which can be cordierite powder, and/or talc, 0 to 15% hydrophobic organic filler, 2% to 10% temporary organic binder which can be methylcellulose, and/or its derivatives, 0% to 2% lubricant, and the balance being novolak;
2) 5% to 50% aluminosilicate fiber, 5% to 50% filler which can be any one or combination of cellulose fibers, cotton fibers, wood fibers, sisal fibers, 2% to 10% temporary organic binder which can be methylcellulose and/or its derivatives, 1% to 3% lubricant, and the balance being novolak;
3) 2% to 50% cellulose fibers or wood fibers, 5% to 50% inorganic filler which can be cordierite powder, and/or talc, 2% to 10%, and more typically 5% to 10% organic binder which can be methylcellulose, and/or its derivatives, 0% to 15% hydrophobic organic filler such as polyester flock, polypropylene flock or powder, acrylic fibers or powders, etc, 0% to 2% lubricant, e.g. soap, and the balance being novolak;
4) 8% to 22%, and more typically 8% to 12% cellulose fibers or wood fibers, 15% to 30% inorganic filler which can be cordierite powder and/or talc, 2% to 10% organic binder which can be methylcellulose and/or its derivatives, 0% to 3%, and more typically 0.5% to 2% lubricant, e.g. soap, and the balance being novolak;
5) 5% to 50% aluminosilicate fiber, 5% to 50% carbonizable filler, 2% to 10% organic binder which can be methylcellulose, and/or its derivatives, 1% to 3% lubricant, and the balance being novolak;
6) 8% to 15% aluminosilicate fiber, 5% to 20% hydrophobic organic filler, e.g. polyester flock, 2% to 10% organic binder which can be methylcellulose and/or its derivatives, 1% to 3% lubricant, e.g. soap, and the balance being novolak.

The mixture components are blended. Most typically dry components are blended after which they are blended with the liquid components in a muller. For solid resin powder such as novolak and solid modifier such as sulfur, the resin and sulfur are dry mixed before the other components are mixed in. Phosphoric acid and the oils, can be added directly to the forming batch. Water is added if necessary to make the mixture handleable for extrusion. The mixture is then extruded. Conventional extrusion equipment can be used. For example, the extrusion can be done using a hydraulic ram extrusion press, or a two stage de-airing single auger extruder, or a twin screw mixer with a die assembly attached to the discharge end. In the latter, the proper screw elements are chosen according to material and other process conditions in order to build up sufficient pressure to force the batch material through the die.

The shaped bodies are then dried. Drying can be done in air at room temperature-80°C, or in dielectric or microwave dryers.

The dried bodies are then cured in the shaped form by heating under the specific temperature and time conditions required for the specific resin. The curing can be done in a conventional oven. Standard curing conditions can be found in the manufacturer's literature. For example, for phenolic resole 43290 from Occidental Chemical Co. the body is heated in air to 140-155°C. The final temperature is attained slowly so that the body does not distort. For example, the body is first heated to 90°C-100°C, then to 120°C-130°C and held at this temperature for 1-2 hours. It is then heated to 140°C-155°C and held for 30 minutes-2 hours for final cure. Curing can also be done in a dielectric or microwave oven.

After the shaping step, and preferably after the curing step, but before the carbonization step, the shaped body can be granulated. The resulting granules can then be processed as would the shaped body to obtain activated carbon.

The carbonization is carried out by heating the body in an inert or reducing atmosphere such as nitrogen or argon or forming gas. Forming gas is a mixture of nitrogen and hydrogen. Typical mixtures by volume are 92:8 or 94:6 N₂:H₂, although any mixtures can be used. Carbonization temperatures are 600°C-1000°C or more typically 700-1000°C for a length of time of usually 1-20 hours. While the body is in the temperature range of 300-600°C, the fugitive materials vaporize. During carbonization low molecular weight compounds separate out and carbon atoms form graphitic structures. For example for phenolic resole resin 43290 from Occidental Chemical Co. and Furan Furcarb resin from QO Chemicals, carbonization is done by heating at a rate of about 150°C/hr in N₂. The temperature is held at about 900°C for 6-10 hours to complete the carbonization. The temperature is then reduced to 25°C at a cooling rate of about 150°C/hr. On carbonization, the body contains random three dimensional oriented graphitic platelets with amorphous carbon between the platelets.

The activation is done by partially oxidizing in a suitable oxidant such as CO₂, steam, air, or a combination of these, etc. Activation can be carried out at temperatures between 700°C-1000°C. Activation conditions depend on type and amount of resin, flow rate of gas, etc. For example for phenolic resole and Furcab resins activation conditions are at about 900°C for 1-5 hours in CO₂ at a flow rate of about 14.2 l/hr. (about 0.5 CFH (ft.³/hr.)). The partial oxidation during activation causes the removal of the amorphous carbon and the formation of molecular size porosity between the graphitic platelets. This porosity and the graphitic platelets impart the adsorption characteristics to the resulting activated carbon body. As with activated carbon coated monoliths, the activation conditions can be determined according to the pore size that is desired in the adsorber.

The activated carbon bodies of the present invention, in both the form of an activated carbon coating on a substrate, and in a shaped activated carbon body, especially honeycombs, are especially suited for adsorption applications. A workstream is passed into the body, through the inlet end, one or more contaminants or components are adsorbed the activated carbon, and thereafter, the purified workstream passes out of the body through the outlet end.

To more fully illustrate the invention, the following non-limiting examples are presented. All parts, portions, and percentages are on a weight basis unless otherwise stated.

### Example 1

To a phenolic resole resin having a viscosity of about 100 mPas (cps), about 5% of fine sulfur powder was added.
Phenolic resin was from Georgia Pacific Co. The resin was then coated onto a porous cordierite honeycomb with a porosity of about 48%. The resin was then cured by first drying at about 90°C and heating to about 125°C and holding for about 30 minutes and then heating to about 150°C and holding for about 1 hour. An identical sample was made from the resin without adding the sulfur powder. Both the samples were then heated to about 900°C in nitrogen for about 6 hours for carbonization and then activated in carbon dioxide for about 2 hours. The adsorption capacity was measured for a 1500 ppm butane-containing nitrogen stream at about 4000 cc/min. flow rate for the 2.54 cm. (1") and 3.8 cm (1.5") long samples. The sample without sulfur had an adsorption capacity of about 132 mg compared to about 181 mg for the sample coated with the sulfur containing resin.

### Example 2

A composition containing about 56.6% Durite resole resin from Borden Chemical Co., about 22.6% cellulose fiber from International Filler Co., North Tonowanda, N.Y., about 15.1% finely ground cordierite powder, about 4.7% methylcellulose binder and about 1% sodium stearate (SAN) lubricant was extruded into a honeycomb shape with about 62 cells/cm² (400 cells/in²) geometry and about 0.15 mm (6 mil) wall thickness. Two other identical compositions but one containing about 5% and the other containing about containing about 10% fine sulfur powder were extruded into the same geometry. All the honeycombs were then cured, carbonized, and activated according to the schedule given above. The adsorption capacity was measured on the standard 2.54 cm. (1") diameter and 3.8 cm (1.5") long samples according to the method given above. The adsorption capacity of the non-sulfur containing composition was 374 mg. The adsorption capacity of the 5% sulfur containing composition was about 570 mg, and that of the 10% sulfur containing composition was about 512 mg. There is thus a substantial increase in adsorption capacity due to addition of sulfur to the resin.

### Example 3

The phenolic resole resin composition of Example 2 was used except that the cellulose fibers were replaced with wood fibers from American Wood Fibers, Schofield, Wi. The composition was extruded with and without sulfur at about 5% and 10% as in Example 2. The honeycomb composition without sulfur had an adsorption capacity of about 430 mg compared to about 546 mg and 567 mg for compositions containing about 5% and 10% sulfur respectively.

In all three examples, significant increase in adsorption capacity is clearly seen.

### Example 4

The non-sulfur containing compositions of Examples 2 and 3 were extruded with addition of about 2% phosphoric acid. The honeycombs were then cured, carbonized, and activated and the adsorption capacities were measured. The adsorption capacities were about 432 and about 575 mg. respectively for cellulose fiber and wood fiber containing compositions. These adsorption capacities are significantly higher than the equivalent compositions without the phosphoric acid, which had capacities of about 364 mg and about 430 mg respectively.

### Example 5 (Comparative)

A resin composition containing about 56.6% phenolic resin from Borden Chemical Co., about 22.6% cellulose fibers from International Filler Co., Tonowanda, N.Y., about 15.1% cordierite grog, about 4.7% methocel and about 1% sodium stearate (SAN) as a lubricant was extruded into a honeycomb structures with a 62 cells/cm² (400 cells/in²) geometry and a wall thickness of about 0.15 mm (6 mil). The honeycombs thus extruded were cured, carbonized, and activated according to the previously given schedules. The adsorption capacity of the standard activated sample (2.54 cm. (1") diameter and about 3.8 cm.(1.5") long) was about 374 mg. in a 4000 cc/min. flow rate of nitrogen gas carrying about 1500 ppm butane.

### Example 6 (Comparative)

The same components as in Example 2 were used except the resin was pre-mixed with about 2% oil from 3M Co. commonly available as a lubricant. Honeycombs were extruded and processed as in the previous examples. The adsorption capacity of the standard sized honeycomb activated under the same conditions was about 472 mg, which is substantially higher than that obtained in Example 2 with a composition that does not contain the oil. The adsorption capacity of this non-oil composition was about 374 mg.

### Example 7 (Comparative)

The procedure of Example 6 was repeated but with about 5% oil pre-mixed with the resin. The adsorption capacity of the standard honeycomb was measured as about 498 mg.

The above examples show that mixing of a non-miscible liquid which does not chemically react with the resin can substantially increase the performance of the activated carbon honeycombs.

### Example 8

The composition of Example 3 containing wood fibers was mixed with about 1% oil and about 5% sulfur and was then extruded, cured, carbonized, and activated according to the schedules given earlier. The adsorption capacity of the samples was measured in a stream of about 4000 cc/min nitrogen containing about 1500 ppm butane. The adsorption capacity was about 582 mg. The adsorption capacity is substantially higher than the 430 mg. for the composition containing no oil or sulfur and also higher than the composition containing about 5% sulfur which had a capacity of about 546 mg.

### Example 9

The composition of Example 3 containing wood fibers was mixed with about 1% oil and about 10% sulfur and then processed as described in Example 8. The adsorption capacity for this sample was about 618 mg. which is substantially higher than the 567 mg. for a composition containing 10% sulfur alone.

### Example 10

The composition of Example 3 containing wood fibers was mixed with about 1% oil, about 10% sulfur, about 2% phosphoric acid and processed as before. This sample had an adsorption capacity of about 533 mg. This same composition without the adsorption enhancing agents had an adsorption capacity of about 430 mg. The mixed agent composition thus results in a higher adsorption capacity activated carbon.

The above examples show that a mixture of modifiers of oil, sulfur, and phosphoric acid result in higher adsorption capacities than the modifiers used alone.

### Example 11

A composition containing about 49% phenolic resole resin, about 20% wood fibers, about 12% fine cordierite powder (grog), about 9.8% sulfur, about 2% phosphoric acid, and about 2.5% flock (hydrophobic organic filler from polyester fibers from International Filler Corp., North Tonowanda, N.Y., about 1% sodium stearate (SAN) as lubricant, and about 3.7% methylcellulose as binder was extruded, cured, carbonized, and activated as described before. The adsorption capacity of the standard size sample in this case was about 740 mg for the 1500 mg butane test.

### Example 12

The composition of Example 11 was used but with replacement of cordierite grog with talc. The experiment was repeated with extrusion of honeycombs followed by curing, carbonization, and activation. The resulting standard size sample had an adsorption capacity of about 720 mg, which is about the same as that of Example 11.

## Claims

1. A method of making an activated carbon body, the method comprising:
a) providing an inorganic substrate;
b) providing a thermosetting resin and an adsorption enhancing additive which is elemental sulfur with optional addition of oil which is non-miscible with and non-reactive with the thermosetting resin;
c) contacting the inorganic substrate with the thermosetting resin and the adsorption enhancing additive to coat the substrate with the thermosetting resin and the adsorption enhancing additive;
d) curing the thermosetting resin;
e) carbonizing the cured thermosetting resin; and
f) activating the carbonized cured thermosetting resin to produce a coating of activated carbon on the substrate and form the activated carbon body.

2. A method of claim 1 wherein step b) is carried out by forming a mixture comprising in weight percent 0.1% to 25% sulfur, perferably 2 to 10% by weight sulfur, and the balance being thermosetting resin.

3. A method of claim 1 or 2 wherein the substrate is a honeycomb structure.

4. A method of making an activated carbon body, the method comprising:
a) forming a mixture comprising a thermosetting resin, an adsorption enhancing additive, selected from the group consisting of elemental sulfur, phosphoric acid and combinations thereof, with optional additions of oil which is non-miscible with and non-reactive with the thermosetting resin as additional adsorption enhancing additive, and combinations thereof, temporary organic binder, and fillers;
b) shaping the mixture into a body;
c) curing the thermosetting resin;
d) carbonizing the cured thermosetting resin; and
e) activating the carbonized cured thermosetting resin to produce a shaped body of activated carbon.

5. A method of claim 4 wherein the mixture in step a) also includes a forming aid.

6. A method of claim 4 or 5 wherein the fillers are selected from the group consisting of cellulose fibers, cotton fibers, wood fibers, sisal fibers, cordierite powder, clays, talcs, aluminosilicate fibers, and combinations thereof, with optional additions of hydrophobic organic filler.

7. A method of any of claims 1 to 6 wherein the thermosetting resin is a liquid thermosetting resin and the adsorption enhancing additive is sulfur.

8. A method of any of claims 4 to 7 wherein the mixture comprises in weight percent 0.1% to 20% sulfur, 0 to 5% phosphoric acid, 0 to 10% oil, preferably 5% to 15% sulfur, and 0.5% to 3% oil, the balance being a liquid thermosetting resin.

9. A method of any of claims 4 to 7 wherein the mixture comprises in weight percent 0.1% to 20% sulfur, 0 to 5% phosphoric acid, 0 to 7% oil, 2% to 95% fillers, 0.5% to 10% cellulose ether temporary organic binder, 0 to 2% lubricant, with the balance being phenolic resin.

10. A method of any of claims 4 to 7 wherein the mixture comprises in weight percent 5% to 50% cellulose fibers, 0 to 15% hydrophobic organic filler, 2% to 10% organic binder selected from the group consisting of methylcellulose, methylcellulose derivatives, and combinations thereof, 0% to 2% lubricant as a forming aid, and the balance being phenolic resole.

11. A method of any of claims 4 to 7 wherein the mixture comprises in weight percent 5% to 15% sulfur, 0.5% to 3% oil, 15% to 30% filler selected from the group consisting of cellulose fibers, wood fibers, and combinations thereof, 5% to 20% cordierite, 2% to 8% organic binder selected from the group consisting of methylcellulose, methylcellulose derivatives, and combinations thereof, 0.5% to 3% sodium stearate lubricant as a forming aid, and the balance being phenolic resole.

12. A method any of claims 1 to 6 wherein the thermosetting resin is solid thermosetting resin.

13. A method of claim 12 wherein the mixture comprises in weight percent 0.1% to 20% sulfur, and 0 to 7% oil, preferably 5% to 15% sulfur, and 0.5% to 3% oil, with the balance being solid thermosetting resin.

14. A method of claim 12 wherein the composition comprises in percent by weight 2% to 50% cellulose fiber, 5% to 50% filler selected from the group consisting of cordierite powder, talc, and combinations thereof, 0 to 15% hydrophobic organic filler, 2% to 10% temporary organic binder selected from the group consisting of methylcellulose, methylcellulose derivatives, and combinations thereof, 0% to 2% lubricant, and the balance being novolak.

15. A method of claim 12 wherein the composition comprises in percent by weight 5% to 50% aluminosilicate fiber, 5% to 50% filler selected from the group consisting of cellulose fibers, cotton fibers, wood fibers, sisal fibers, and combinations thereof, 2% to 10% temporary organic binder selected from the group consisting of methylcellulose, methylcellulose derivatives, and combinations thereof, 1% to 3% lubricant, and the balance being novolak.

16. A method of any of claims 4 to 15, wherein the mixture is shaped by extrusion.

17. A method of any of claims 4 to 16 wherein after the curing step and before the carbonization step, the shaped body is granulated.

18. A method of any of claims 4 to 17 wherein the mixture is extruded into a honeycomb structure.

19. Use of an activated carbon body produced according to any one of claims 1 to 18 for the removal of one or more components from a workstream by passing the workstream therethrough.

## Patentansprüche

1. Verfahren zur Herstellung eines Aktivkohlekörpers, mit den Schritten:
a) Bereitstellen eines anorganischen Substrats;
b) Bereitstellen eines wärmehärtbaren Harzes und eines adsorptionsverbessernden Zusatzes, bei dem es sich um elementaren Schwefel mit wahlweisem Zusatz von Öl handelt, das mit dem wärmehärtbaren Harz nicht mischbar ist und damit nicht reagiert;
c) Inkontaktbringen des anorganischen Substrats mit dem wärmehärtbaren Harz und dem adsorptionsverbessernden Zusatz, um das Substrat mit dem wärmehärtbaren Harz und dem adsorptionsverbessernden Zusatz zu beschichten;
d) Härten des wärmehärtbaren Harzes;
e) Carbonisieren des gehärteten wärmehärtbaren Harzes; und
f) Aktivieren des carbonisierten, gehärteten, wärmehärtbaren Harzes, um eine Aktivkohleschicht auf dem Substrat bereitzustellen und den Aktivkohlekörper zu bilden.

2. Verfahren nach Anspruch 1, wobei Schritt b) durchgeführt wird, indem ein Gemisch gebildet wird, das in Gewichtsprozent 0,1-25% Schwefel, vorzugsweise 2-10 Gew.-% Schwefel aufweist, wobei der Restbestandteil das wärmehärtbare Harz ist.

3. Verfahren nach Anspruch 1 oder 2, wobei das Substrat eine Wabenstruktur ist.

4. Verfahren zur Herstellung eines Aktivkohlekörpers, mit den Schritten:
a) Bilden eines Gemisches, enthaltend ein wärmehärtbares Harz, einen adsorptionsverbessernden Zusatz, ausgewählt aus der Gruppe, bestehend aus elementarem Schwefel, Phosphorsäure und Kombinationen hiervon, mit wahlweisen Beigaben von Öl, das mit dem wärmehärtbaren Harz nicht mischbar ist und damit nicht reagiert als weiteren adsorptionsverbessernden Zusatz und Kombinationen hiervon, temporären organischen Binder und Füllstoffe;
b) Formen des Gemisches zu einem Körper;
c) Härten des wärmehärtbaren Harzes;
d) Carbonisieren des gehärteten wärmehärtbaren Harzes; und
e) Aktivieren des carbonisierten, gehärteten, wärmehärtbaren Harzes, um einen geformten Körper aus Aktivkohle zu bilden.

5. Verfahren nach Anspruch 4, wobei das Gemisch in Schritt a) weiterhin ein Formhilfsmittel enthält.

6. Verfahren nach Anspruch 4 oder 5, wobei die Füllstoffe ausgewählt sind aus der Gruppe, bestehend aus: Cellulosefasern, Baumwollfasern, Holzfasern, Sisalfasern, Cordieritpulver, Tone, Talke, Aluminiumsilicatfasern und Kombinationen hiervon, mit wahlweisen Beigaben eines hydrophoben organischen Füllstoffs.

7. , Verfahren nach einem der Ansprüche 1 bis 6, wobei das wärmehärtbare Harz ein flüssiges wärmehärtbares Harz ist, und der adsorptionsverbessernde Zusatz Schwefel ist.

8. Verfahren nach einem der Ansprüche 4 bis 7, wobei das Gemisch in Gewichtsprozent 0,1% bis 20% Schwefel, 0 bis 5% Phosphorsäure, 0-10% Öl, vorzugsweise 5-15% Schwefel und 0,5% bis 3% Öl, aufweist, wobei der Restbestandteil ein flüssiges wärmehärtbares Harz ist.

9. , Verfahren nach einem der Ansprüche 4 bis 7, wobei das Gemisch in Gewichtsprozent 0,1 bis 20% Schwefel, 0 bis 5% Phosphorsäure, 0 bis 7% öl, 2% bis 95% Füllstoffe, 0,5% bis 10% Celluloseether als temporären organischen Binder und 0 bis 2% Gleitmittel bzw. Schmiermittel enthält, wobei der Restbestandteil Phenolharz ist.

10. Verfahren nach einem der Ansprüche 4 bis 7, wobei das Gemisch in Gewichtsprozent 5% bis 50% Cellulosefasern, 0 bis 15% eines hydrophoben organischen Füllstoffes, 2% bis 10% eines organischen Binders, ausgewählt aus der Gruppe, bestehend aus Methylcellulose, Methylcellulose-Derivaten und Kombinationen hiervon und 0 bis 2% Gleitmittel bzw. Schmiermittel als Formhilfsmittel enthält, wobei der Restbestandteil Phenol-Resol bzw. Resol ist.

11. Verfahren nach einem der Ansprüche 4 bis 7, wobei das Gemisch in Gewichtsprozent 5% bis 15% Schwefel, 0,5% bis 3% Öl, 15% bis 30% Füllstoff, ausgewählt aus der Gruppe, bestehend aus Cellulosefasern, Holzfasern und Kombinationen hiervon, 5% bis 20% Cordierit, 2% bis 8% organischen Binder, ausgewählt aus der Gruppe, bestehend aus Methylcellulose, Methylcellulose-Derivaten und Kombinationen hiervon und 0,5% bis 3% Natriumstearat-Gleitmittel bzw. -Schmiermittel als Formhilfsmittel enthält, wobei der Restbestandteil Phenol-Resol bzw. Resol ist.

12. Verfahren nach einem der Ansprüche 1 bis 6, wobei das wärmehärtbare Harz ein festes wärmehärtbares Harz ist.

13. Verfahren nach Anspruch 12, wobei das Gemisch in Gewichtsprozent 0,1 bis 20% Schwefel, und 0 bis 7% Öl, vorzugsweise 5% bis 15% Schwefel und 0,5% bis 3% Öl aufweist, wobei der Restbestandteil ein festes wärmehärtbares Harz ist.

14. Verfahren nach Anspruch 12, wobei die Zusammensetzung in Gewichtsprozent 2% bis 50% Cellulosefasern, 5% bis 50% Füllstoff, ausgewählt aus der Gruppe, bestehend aus Cordieritpulver, Talk und Kombinationen hiervon, 0% bis 15% eines hydrophoben organischen Füllstoffs, 2% bis 10% temporären organischen Binder, ausgewählt aus der Gruppe, bestehend aus Methylcellulose, Methylcellulose-Derivaten und Kombinationen hiervon und 0% bis 2% Gleitmittel bzw. Schmiermittel aufweist, wobei der Restbestandteil Novolak ist.

15. Verfahren nach Anspruch 12, wobei die Zusammensetzung in Gewichtsprozent 5% bis 50% Aluminiumsilicatfasern, 5% bis 50% Füllstoff, ausgewählt aus der Gruppe, bestehend aus Cellulosefasern, Baumwollfasern, Holzfasern, Sisalfasern und Kombinationen hiervon, 2% bis 10% eines temporären organischen Binders, ausgewählt aus der Gruppe, bestehend aus Methylcellulose, Methylcellulose-Derivaten und Kombinationen hiervon und 1% bis 3% Gleitmittel bzw. Schmiermittel aufweist, wobei der Restbestandteil Novolak ist.

16. Verfahren nach einem der Ansprüche 4 bis 15, wobei das Gemisch mittels Extrusion geformt wird.

17. Verfahren nach einem der Ansprüche 4 bis 16, wobei der geformte Körper nach dem Härtschritt und vor dem Carbonisierungsschritt granuliert wird.

18. Verfahren nach einem der Ansprüche 4 bis 17, wobei das Gemisch zu einer Wabenstruktur extrudiert wird.

19. Verwendung eines Aktivkohlekörpers, hergestellt nach einem der Ansprüche 1 bis 18, zur Entfernung eines oder mehrerer Bestandteile aus einem Betriebsstrom, indem der Betriebsstrom durch diesen geführt wird.

## Revendications

1. Un procédé pour fabriquer un corps en charbon actif, le procédé comprenant les opérations consistant :
a) à prendre un substrat inorganique ;
b) à prendre une résine thermodurcissable et un additif renforçateur d'adsorption qui est du soufre élémentaire avec addition facultative d'une huile qui n'est ni miscible à la résine thermodurcissable ni réactive vis-à-vis d'elle ;
c) à mettre en contact le substrat inorganique avec la résine thermodurcissable et l'additif renforçateur d'adsorption afin de revêtir le substrat de la résine thermodurcissable et de l'additif renforçateur d'adsorption ;
d) à faire durcir la résine thermodurcissable ;
e) à carboniser la résine thermodurcissable durcie ; et
f) à activer la résine thermodurcissable durcie et carbonisée pour produire un revêtement de charbon actif sur le substrat et former le corps de charbon actif.

2. Un procédé selon la revendication 1, dans lequel l'opération (b) est réalisée en formant un mélange comprenant, en pourcentages pondéraux, 0,1 à 25 % de soufre, de préférence 2 à 10 % de soufre, le complément à 100 % étant formé de résine thermodurcissable.

3. Un procédé selon la revendication 1 ou 2, dans lequel le substrat est une structure en nid d'abeilles.

4. Un procédé pour confectionner un corps en charbon actif, le procédé comprenant les opérations consistant :
a) à former un mélange comprenant une résine thermodurcissable, un additif renforçateur d'adsorption choisi dans le groupe formé par le soufre élémentaire, l'acide phosphorique et leurs combinaisons, avec des additions facultatives d'une huile qui n'est ni miscible à la résine thermodurcissable ni réactive vis-à-vis d'elle en tant qu'additif renforçateur d'adsorption supplémentaire, et leurs combinaisons, de liant organique temporaire et de charges ;
b) à façonner le mélange en un corps ;
c) à faire durcir la résine thermodurcissable ;
d) à carboniser la résine thermodurcissable durcie ; et
e) à activer la résine thermodurcissable durcie et carbonisée pour produire un corps façonné en charbon actif.

5. Un procédé selon la revendication 4, dans lequel le mélange de l'opération (a) comprend aussi un adjuvant de façonnage.

6. Un procédé selon la revendication 4 ou 5, dans lequel les charges sont choisies dans le groupe formé par les fibres de cellulose, les fibres de coton, les fibres de bois, les fibres de sisal, la cordiérite en poudre, les argiles, les talcs, les fibres d'aluminosilicates, et leurs combinaisons, avec des additions facultatives de charge organique hydrophobe.

7. Un procédé selon l'une quelconque des revendications 1 à 6, dans lequel la résine thermodurcissable est une résine thermodurcissable liquide et l'additif renforçateur d'adsorption est le soufre.

8. Un procédé selon l'une quelconque des revendications 4 à 7, dans lequel le mélange comprend en pourcentages pondéraux 0,1 à 20 % de soufre, 0 à 5 % d'acide phosphorique, 0 à 10 % d'huile, de préférence 5 % à 15 % de soufre, et 0,5 à 3 % d'huile, le complément à 100 % étant formé d'une résine thermodurcissable liquide.

9. Un procédé selon l'une quelconque des revendications 4 à 7, dans lequel le mélange comprend en pourcentages pondéraux 0,1 à 20 % de soufre, 0 à 5 % d'acide phosphorique, 0 à 7 % d'huile, 2 % à 95 % de charges, 0,5 % à 10 % d'éther de cellulose formant liant organique temporaire, 0 à 2 % d'agent lubrifiant, et le complément à 100 % de résine phénolique.

10. Un procédé selon l'une quelconque des revendications 4 à 7, dans lequel le mélange comprend en pourcentages pondéraux 5 % à 50 % de fibres de cellulose, 0 à 15 % de charge organique hydrophobe, 2 à 10 % de liant organique choisi dans le groupe formé par la méthylcellulose, les dérivés de la méthylcellulose et leurs combinaisons, 0 % à 2 % d'agent lubrifiant présent en tant qu'adjuvant de façonnage, et le complément à 100 % de résol phénolique.

11. Un procédé selon l'une quelconque des revendications 4 à 7, dans lequel le mélange comprend en pourcentages pondéraux 5 % à 15 % de soufre, 0,5 % à 3 % d'huile, 15 % à 30 % de charge choisie dans le groupe formé par les fibres de cellulose, les fibres de bois, et leurs combinaisons, 5 à 20 % de cordiérite, 2 à 8 % de liant organique choisi dans le groupe formé par la méthylcellulose, les dérivés de la méthylcellulose, et leurs combinaisons, 0,5 % à 3 % de stéarate de sodium lubrifiant présent en tant qu'adjuvant de façonnage, et le complément à 100 % de résol phénolique.

12. Un procédé selon l'une quelconque des revendications 1 à 6, dans lequel la résine thermodurcissable est une résine thermodurcissable solide.

13. Un procédé selon la revendication 12, dans lequel le mélange comprend en pourcentages pondéraux 0,1 % à 20 % de soufre et 0 à 7 % d'huile, de préférence 5 % à 15 % de soufre, et 0,5 % à 3 % d'huile, le complément à 100 % étant formé de résine thermodurcissable solide.

14. Un procédé selon la revendication 12, dans lequel la composition comprend en pourcentages pondéraux 2 % à 50 % de fibre de cellulose, 5 % à 50 % de charge choisie dans le groupe formé par la cordiérite en poudre, le talc, et leurs combinaisons, 0 à 15 % de charge organique hydrophobe, 2 % à 10 % de liant organique temporaire choisi dans le groupe formé par la méthylcellulose, les dérivés de la méthylcellulose, et leurs combinaisons, 0 % à 2 % d'agent lubrifiant, et le complément à 100 % de novolaque.

15. Un procédé selon la revendication 12, dans lequel la composition comprend en pourcentages pondéraux 5 % à 50 % de fibre d'aluminosilicate, 5 % à 50 % de charge choisie dans le groupe formé par les fibres de cellulose, les fibres de coton, les fibres de bois, les fibres de sisal, et leurs combinaisons, 2 % à 10 % de liant organique temporaire choisi dans le groupe formé par la méthylcellulose, les dérivés de la méthylcellulose, et leurs combinaisons, 1 % à 3 % d'agent lubrifiant, et le complément à 100 % de novolaque.

16. Un procédé selon l'une quelconque des revendications 4 à 15, dans lequel le mélange est façonné par extrusion.

17. Un procédé selon l'une quelconque des revendications 4 à 16, dans lequel après l'opération de durcissement et avant l'opération de carbonisation, le corps façonné est granulé.

18. Un procédé selon l'une quelconque des revendications 4 à 17, dans lequel le mélange est extrudé en une structure en nid d'abeilles.

19. Utilisation d'un corps en charbon actif obtenu conformément à l'une quelconque des revendications 1 à 18 pour l'élimination d'un ou plusieurs composants d'un flux à traiter en faisant traverser celui-ci par le flux à traiter.
